# EUROPÄISCHE PATENTANMELDUNG

(11) **EP 2 827 069 A2**
(43) Veröffentlichungstag der Anmeldung: **21.01.2015**
(21) Anmeldenummer: 14002446.4
(22) Anmeldetag: 16.07.2014
(51) Int. Cl.: F24D 13/02, H05B 3/00

(54) **Kombiniertes Entkopplungs- und Heizungssystem**

(30) Priorität: 17.07.2013 DE 202013006416 U
(71) Anmelder: Blanke Gmbh & Co. Kg, 58642 Iserlohn-Stenglingsen (DE)
(72) Erfinder: Peter Blanke, 58642 Iserlohn (DE)
(74) Vertreter: Schneider, Uwe

(57) **Zusammenfassung**

Die Erfindung betrifft ein kombiniertes Entkopplungs- und Heizungssystem (1), insbesondere für die Verlegung keramischer Beläge (10) im Dünnbettverfahren (12), aufweisend mindestens eine aus einem Strukturelement gebildete Verankerungsschicht (2) für eine im Bereich der Oberseite des Entkopplungs- und Heizungssystems (1) einzubringende, bei der Verarbeitung plastische und danach aushärtende Verfüllmasse (12). Hierbei ist die Verankerungsschicht (2) zumindest teilweise aus mechanisch hoch belastbaren Verstärkungsfasern (7, 8) gebildet ist, deren Material selbst elektrisch leitfähig ist oder die durch Beschichtungen und/oder Zusätze elektrisch leitfähig geworden sind, wobei die Verstärkungsfasern (7, 8) durch Stromdurchgang erwärmbar sind und die Heizschicht einer elektrisch betreibbaren Flächenheizung bilden.

## Beschreibung

Die Erfindung betrifft ein kombiniertes Entkopplungs- und Heizungssystem, insbesondere für die Verlegung keramischer Beläge im Dünnbettverfahren, gemäß Oberbegriff des Anspruches 1.

Keramische Beläge und insbesondere Fliesen werden heute üblicherweise im sogenannten Dünnbettverfahren verlegt, bei dem die keramischen Beläge in eine dünne Kleberschicht aus einem Fliesenmörtel verlegt werden. Dieses Verfahren weist bei der Verarbeitung von keramischen Belägen immer dann Probleme auf, wenn der Untergrund unter dem keramischen Belag nicht stabil genug ausgebildet ist, um Relativbewegungen des Untergrundes zu verhindern. Dies ist unter anderem dann der Fall, wenn Fliesenbeläge auf schwingenden Holzböden oder sonstigen nicht hinreichend starren Untergründen verlegt werden sollen. Die relative Beweglichkeit des Untergrundes führt dann häufig zu schleichender Zerstörung der Fliesen, wodurch geringe Haltbarkeitszeiten derartiger Beläge nicht zu vermeiden sind und für die Sanierung hohe Kosten entstehen können.

Es ist daher schon vielfach vorgeschlagen worden, derartige keramische Beläge dadurch haltbarer verlegen zu können, dass eine gezielte Entkopplung zwischen dem keramischen Belag und dem Untergrund herbeigeführt wird. Ein solches Entkopplungssystem sorgt für die mechanische Entkopplung zwischen dem Fliesenbelag und dem Untergrund, so dass Relativbewegungen zwischen Fliesenbelag und Untergrund möglich sind und nicht zur geschilderten schleichenden Zerstörung des Fliesenbelags führen. Derartige Entkopplungssysteme haben jedoch häufig den Nachteil, dass die mechanische Belastbarkeit des Fliesenbelages und des Entkopplungssystems nicht zufriedenstellend war. Einerseits war die Verankerung der Fliesen an dem Entkopplungssystem nicht hinreichend fest, andererseits war die Druckfestigkeit des Entkopplungssystems selbst nicht optimal. Ein verbessertes und sehr dünnes Entkopplungssystem wurde mit der DE 10 2004 026 652 A1 vorgeschlagen, bei dem eine mit Hohlräumen versehene Verankerungsschicht nach dem Einbringen einer Verfüllmasse in Form des Fliesenklebers im wesentlichen vollständig mit dem Fliesenkleber ausgefüllt ist und eine in die ausgehärtete Verfüllmasse eingebettete Armierungsschicht zusammen mit der Verankerungsschicht eine Versteifungs- und Bewehrungsfunktion für die Abtragung von oberhalb eingeleiteter mechanischer Belastungen erfüllt.

Neben der Forderung nach einer sicheren Entkopplung von keramischen Belägen und dem Untergrund etwa im zu sanierenden Altbau, aber auch im Neubau werden zunehmend keramische Beläge oberhalb von Fußbodenheizungssystemen eingesetzt. Fußbodenheizungssysteme sind typischerweise unterhalb eines Bodenbelags in den Fußbodenaufbau eingebrachte Heizungssysteme, bei denen entweder durch ein mäanderförmig verlegtes Rohrsystem ein Wärmeträgerfluid zirkuliert oder durch elektrische Heizelemente unterhalb des Bodenbelags eine Heizwirkung hervorgerufen wird und damit den Bodenbelag von unten heizt. Durch die große Heizfläche kann ein derartiges Fußbodenheizsystem bevorzugt auch im Niedertemperaturbereich betrieben werden. Allerdings werden z.B. keramische Bodenbeläge durch derartige Heizsysteme ebenfalls mechanisch stark belastet, da durch die unterschiedlichen Wärmedehnungen der verschiedenen Schichten der Fußbodenheizung Relativverschiebungen zwischen dem keramischen Bodenbelag und seinem Untergrund hervorgerufen werden können, die ebenfalls wieder zu Spannungsrissen und damit zu einer schleichenden Zerstörung des keramischen Belags führen können.

Es ist daher schon vorgeschlagen worden, auch in diesem Fall zwischen dem klassischen schichtartigen Aufbau der Fußbodenheizung und dem keramischen Belag eine Entkopplungsmatte anzuordnen, die den Untergrund und die Fußbodenheizung von dem keramischen Belag entkoppelt. Dies führt aber zu einer deutlichen Erhöhung der Gesamtdicke des Fußbodenaufbaus, der z.B. im Bereich der Altbausanierung meist nicht akzeptabel ist. Als elektrische Heizelemente können wie in der DE 10 2006 004 755 B4 auf der Oberseite einer Entkopplungsmatte in Aufnahmen verlegte Heizdrähte verwendet werden, deren manuelle Verlegung aber einen hohen Herstellungsaufwand verursacht und auch eine entsprechende zusätzliche Schichtdicke bedingt. Eine weitere Lösung gemäß der DE 10 2005 015 051 A1 sieht vor, dass anstelle von Heizdrähten zum Aufbau einer Flächenheizung Heizschichten aus elektrisch leitfähigen Vliesen oder Geweben oder Gelegen verwendet werden kann, wobei diese Heizschichten durch einen elektrischen Strom erwärmt werden können und diese Heizschichten dann die Wärme von unten an den keramischen Belag abgeben. Die Heizschichten können hierzu z.B. aus vliesartig ausgebildeten elektrisch leitfähigen Fasern wie z.B. Kohlefasern bestehen, die beim Stromdurchgang den Strom in Wärme umwandeln können. Diese Heizschichten werden dann derart in einen schichtartigen Aufbau eingebettet, dass die elektrisch leitfähige Heizschicht ober- und unterseitig von Isolierschichten umgrenzt wird. Darüber hinaus sind weitere mechanisch belastbarere Trägerschichten zusätzlich zu der Heizschicht notwendig, um die mechanische Stabilität der Heizschicht zu gewährleisten. Dies erhöht insgesamt wieder die Dicke des Schichtaufbaus. Auch ist die Verlegung derartiger separater Heizschichten zusätzlicher Arbeitsaufwand und muss sehr sorgfältig ausgeführt werden.

Aufgabe der vorliegenden Erfindung ist es daher, ein gattungsgemäßes Entkopplungssystem derart weiterzubilden, dass das Entkopplungssystem selbst einen Bestandteil eines Heizungssystems bildet.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung beschreibt ein kombiniertes Entkopplungs- und Heizungssystem, insbesondere für die Verlegung keramischer Beläge im Dünnbettverfahren, aufweisend eine aus einem Strukturelement gebildete Verankerungsschicht für eine im Bereich der Oberseite des Entkopplungs- und Heizungssystems einzubringende, bei der Verarbeitung plastische und danach aushärtende Verfüllmasse. Ein derartiges gattungsgemäßes Entkopplungssystem wird dadurch weiter gebildet, dass die Verankerungsschicht zumindest teilweise aus mechanisch hoch belastbaren Verstärkungsfasern gebildet ist, deren Material selbst elektrisch leitfähig ist oder die durch Beschichtungen und/oder Zusätze elektrisch leitfähig geworden sind, wobei die Verstärkungsfasern durch Stromdurchgang erwärmbar sind und die Heizschicht einer elektrisch betreibbaren Flächenheizung bilden. Mit der Ausbildung der Verankerungsschicht aus Verstärkungsfasern, die gleichzeitig mechanisch hoch belastbar und mittels Stromdurchgang erwärmbar ausgebildet sind, lassen sich beide Funktionen der mechanischen Entkopplung und der Heizung in einer einzigen mechanisch stabilen Schicht realisieren, wodurch zum einen die Zahl der Bauelemente und Schichten reduziert und die Gesamtdicke des Unterbaus für den z.B. keramischen Belag signifikant reduziert werden kann. Die Verstärkungsfasern sind hierbei sowohl dazu gedacht, aus der Belastung des z.B. keramischen Belags stammende Kräfte in der Verankerungsschicht aufzunehmen und entkoppelt auf den Untergrund zu übertragen als auch wesentlicher Bestandteil der Heizschicht zu sein, der durch den Stromdurchgang erwärmt wird und diese Wärme an den z.B. keramischen Belag und damit den Raum übertragen kann. Hierbei wird ausgenutzt, dass die zur Verstärkung dienenden Fasern im wesentlichen die ganze Fläche des Strukturelementes abdecken und damit im wesentlichen gleichmäßig auf dieser Fläche verteilt angeordnet sind. Damit wird die Beheizung dieser Fläche ebenfalls im wesentlichen gleichmäßig erfolgen, ohne dass wie bei anderen Heizungssystemen zusätzlich separate Heizelemente eingebracht oder mehrere kombinierte Schichten zur Heizung und mechanischen Stabilisierung der Heizschicht vorgesehen werden müssen. Zudem kann das Entkopplungs- und Heizungssystem z.B. vom Fliesenleger oder Fußbodenverleger mittels ihm bekannter Techniken wie z.B. dem Verkleben der Verankerungsschicht mit Fliesenklebern oder dgl. eingebaut werden und bedarf dadurch nicht zusätzlicher Gewerke oder speziellem Fachpersonal bei der Verlegung. Insbesondere wird aber die Gesamtdicke des benötigten Schichtaufbaus zur Entkopplung und Heizung entscheidend verringert, da z.B. separate Isolierungs- und Stabilisierungsschichten für die Heizelemente entfallen können, da diese Aufgaben gleichzeitig durch die Verstärkungsfasern übernommen werden. Auch werden die unterschiedlichen Ausdehnungen zwischen den Heizelementen und dem restlichen Schichtaufbau und dem z.B. keramischen Belag signifikant dadurch reduziert, dass die die Heizelemente bildenden Verstärkungsfasern mit der Verfüllmasse eine innige Verbindung eingehen und damit sicher an den z.B. keramischen Belag oder auch andere Beläge angebunden werden können.

Von Vorteil kann es hierbei sein, wenn die elektrisch leitfähigen Verstärkungsfasern als Gewebe und/oder als Gelege und/oder als Vlies ausgebildet und schichtartig angeordnet sind. Dadurch können die mechanischen und elektrisch heizenden Eigenschaften der Verstärkungsfasern in weiten Bereichen an die jeweiligen Bedürfnisse angepasst und beeinflusst werden, z.B. durch die Anordnung und die Lagedichte der Verstärkungsfasern in der Verankerungsschicht. Auch können durch die Länge der Verstärkungsfasern die mechanischen und elektrischen Eigenschaften und damit die Heizeigenschaften je nach Bedarf und geforderter Heizleistung beeinflusst werden.

In einer ersten Ausgestaltung können die elektrisch leitfähigen Verstärkungsfasern aus Fasern auf Kohlenstoffbasis, insbesondere Kohlenstofffasern, und/oder Glasfasern und/oder elektrisch leitfähigen Kunststofffasern und/oder metallischen Fasern oder dgl. mechanisch hoch belastbaren faserartigen Materialien gebildet sein. Denkbar ist es auch, Kombinationen derartiger Fasern in der Verankerungsschicht zu verwenden. Kohlenstofffasern und metallische Fasern sind selbst elektrisch leitend und können bei entsprechender Dimensionierung, z.B. durch entsprechende Querschnitte oder auch ein Bündeln dünner Einzelfasern zu Strängen entsprechende mechanische Belastungen aufnehmen und übertragen. Elektrisch nicht selbst leitende Fasern wie z.B. Glasfasern oder dgl. können durch Zusätze oder auch Beschichtungen elektrisch leitend gemacht werden, wodurch diese Fasern beim Stromdurchgang dann auch für Heizungszwecke genutzt werden können. Es ist auch denkbar, elektrisch leitende und bei Stromdurchgang durch die Verstärkungsfasern selbst elektrisch beheizbare zusätzliche Bestandteile wie zusätzliche Pulver, Emulsionen oder dgl. in die Verankerungsschicht mit einzubinden, um die Heizwirkung zu verbessern. Auch ist es denkbar, in die Verankerungsschicht elektrisch leitfähige und nicht elektrisch leitfähige Verstärkungsfasern einzuarbeiten und damit deren Eigenschaften miteinander in der Verankerungsschicht zu kombinieren.

Von Bedeutung für die Stromleitung ist es insbesondere, zumindest die elektrisch leitfähigen Verstärkungsfasern derart innerhalb der Verankerungsschicht anzuordnen, dass sich zumindest einzelne dieser Verstärkungsfasern kreuzen und elektrisch kontaktierend einander berühren. Hierdurch wird zwischen den einzelnen Verstärkungsfasern an den Kreuzungs- und Kontaktpunkten mit anderen Verstärkungsfasern jeweils eine Weiterleitung des elektrischen Stroms bewirkt, der dafür sorgt, dass z.B. einzelne mechanisch unterbrochene und dadurch nicht den Strom weiter leitende Verstärkungsfasern überbrückt werden und die Heizleistung der Verankerungsschicht durch derartige Defekte nicht wesentlich beeinträchtigt werden kann. Die Vielzahl der Kontaktpunkte zwischen den Verstärkungsfasern sichert somit die gleichmäßige Heizwirkung auch bei punktuellen Defekten oder Verarbeitungsfehlern, indem der Strom sich an jedem Punkt seinen Weg durch den Verbund der Verstärkungsfasern selbst suchen und die Verstärkungsfasern dabei erwärmen kann. Von Vorteil ist es hierfür, wenn die Verstärkungsfasern gitterartig in der Verankerungsschicht angeordnet sind und sich vielfach mit anderen, anders in der Verankerungsschicht orientierten Verstärkungsfasern kreuzen. Die Herstellung derartiger gitterartiger Verankerungsschicht kann einfach und mit herkömmlichen Maschinen und damit kostengünstig erfolgen.

In einer denkbaren Ausgestaltung kann das Strukturelement mattenartig oder bahnenartig vorgefertigt sein, so dass der Verarbeiter des Entkopplungs- und Heizungssystems das Strukturelement wie eine Matte herkömmlicher Entkopplungssysteme auslegen und festlegen bzw. mit der Verfüllmasse ausfüllen kann. Diese Vorgehensweise ist dem Verarbeiter z.B. keramischer Beläge wie etwa einem Fliesenleger vertraut und kann von diesem sachgerecht ausgeführt werden.

Von Vorteil ist es weiterhin, wenn die Verfüllmasse elektrisch isolierend ausgebildet ist. Hierdurch können sofern notwendig die elektrisch leitenden Verstärkungsfasern sicher elektrisch gegenüber den anderen Schichten des Bodenaufbaus isoliert werden.

Von Vorteil ist es weiterhin, wenn im Randbereich der Verankerungsschicht Kontaktierungszonen vorgesehen sind, in denen die Verankerungsschicht mit einer externen Stromversorgung und/oder mit weiteren benachbart anzuordnenden Verankerungsschichten elektrisch verbindbar ist. Derartige Kontaktierungszonen können z.B. im Randbereich der Verankerungsschicht aus überstehenden Verstärkungsfasern gebildet oder auch aus überstehenden elektrisch leitfähigen Schichten aus leitendem Material wie etwa einer Kupferfolie oder dgl. bestehen, mit denen die Verstärkungsfasern des Strukturelementes elektrisch kontaktierend verbunden sind. Damit ist zum einen sichere Kontaktierung der extern zugeführten Stromversorgung in ein verlegtes Entkopplungs- und Heizungssystem möglich, auch können an den Kontaktstelle eines z.B. bahnartig zusammen gesetzten Entkopplungs- und Heizungssystems die Kontaktierungen der einzelnen Bahnen der Verankerungsschicht sicher gestellt werden.

Von Vorteil hinsichtlich der elektrischen Sicherheit des Entkopplungs- und Heizungssystems ist es, wenn die Verstärkungsfasern zur Beheizung der Heizschicht mit Niederspannung betreibbar sind. Derartige Niederspannung im Bereich von 12 V, 24 V oder auch 48 V ist in der Regel auch bei Fehlfunktionen für den Menschen unbedenklich und kann daher z.B. auch im Nassbereich einer Badezimmers als Fußbodenheizung eingesetzt werden.

Von Vorteil ist es weiterhin, wenn oberseitig an der Verankerungsschicht zumindest abschnittsweise fest eine Armierungsschicht angeordnet ist. Hierbei ist durch die oberseitig angeordnete Verankerungsschicht und insbesondere die darüber aufgelegte und damit befestigte Armierungsschicht dafür gesorgt, dass ein oberseitig eingebrachter Fugenmörtel sich vollständig mit dem Entkopplungs- und Heizungssystem verbindet und dabei dafür sorgt, dass eine entsprechende Belastbarkeit des Entkopplungs- und Heizungssystems wird.

In einer besonders bevorzugten Ausgestaltung kann vorgesehen werden, dass das gitterartige Strukturelement aus stabförmig gitterartig zueinander angeordneten und aneinander an den Kreuzungspunkten des Gitters festgelegten Einzelstäben gebildet ist. Ein derartiges gitterartiges Strukturelement läßt sich einfach aus gleichartig vorfertigbaren Einzelstäben herstellen und man kann daher etwa kostengünstig hergestellte Einzelstäbe verarbeiten, die auf Trommeln aufgewickelt und für das Herstellen der gitterartigen Strukturelemente jeweils zueinander positioniert werden. Damit ist die Herstellung eines solchen gitterartigen Strukturelementes sehr kostengünstig und einfach. Anders als bei bekannten Entkopplungssystemen müssen keine aufwendigen Werkzeuge gefertigt werden, die zueinander abgewinkelte oder sonstwie verformte Bereiche herstellen. Hierbei kann in weiterer Ausgestaltung dafür gesorgt werden, dass die Einzelstäbe des gitterartigen Strukturelementes eine im wesentlichen rechteckige Querschnittsform aufweisen. Insbesondere wenn die Einzelstäbe ungleichförmige Abmessungen ihrer Kanten aufweisen, läßt sich die Dicke der gitterartigen Strukturelemente einfach verändern und an unterschiedliche Bedürfnisse anpassen.

Von besonderem Vorteil ist es, wenn die sich kreuzenden Einzelstäbe des gitterartigen Strukturelementes so angeordnet sind, dass eine erste Schicht aus jeweils gleich orientierten Einzelstäben unterhalb einer zweiten Schicht aus dazu in einem Winkel angeordneten, jeweils zueinander gleich orientierten Einzelstäben besteht. Somit entfällt bei der Herstellung des gitterartigen Strukturelementes die Notwendigkeit, die Einzelstäbe wie bei textilen Geweben jeweils zueinander zu verschränken, was die Herstellung weiter vereinfacht und zum anderen dafür sorgt, dass die gleichartigen Schichten der unteren und der oberen Lage der Einzelstäbe zwischen sich jeweils entsprechende Freiräume bilden, die für die Einbringung der Verfüllmasse genutzt werden können. Es ist hierbei denkbar, dass die gitterartige Struktur aus den Einzelstäben eine Rauten-, Rechteck- oder Quadratform aufweist. Auch andere geometrische Muster sind selbstverständlich denkbar.

Eine weitere Vereinfachung der Herstellung des Strukturelementes lässt sich erreichen, wenn die Einzelstäbe der beiden Schichten miteinander im Kreuzungsbereich unter mechanischem Druck verschweißt oder verpresst sind. Etwa kann durch Aufheizen der z.B. durch Temperatureinfluss plastisch verformbaren Einzelstäbe dafür gesorgt werden, dass im Berührungsbereich der Einzelstäbe eine Erweichung und ein Verschweißen mit dem jeweils darunter liegenden Einzelstab erfolgt und sich damit ein mattenartiger Verbund der Einzelstäbe ergibt. Gleichzeitig wird durch die Verbindung der Einzelstäbe dafür gesorgt, dass der elektrische Übergangswiderstand zwischen den Einzelstäben gering ist und die Einzelstäbe dann quasi zu einer Heizmatte verbunden sind.

Weiterhin ist es denkbar, dass etwa bei einem Verschweißen der Einzelstäbe die Einzelstäbe des gitterartigen Strukturelementes zu mindestens an den Kreuzungspunkten zueinander verkippte Kantenbereiche aufweisen, wodurch sich hinterschnittene Abschnitte an den Einzelstäben bilden. Durch das plastische Umformen der Einzelstäbe im Bereich der Kreuzungspunkte z.B. durch Temperatureinfluss kommt es dazu, dass die Einzelstäbe durch den mechanischen Druck ein wenig verformt werden und dadurch ihre Ausrichtung abhängig von der Lage des mit dem Einzelstab zu verbindenden anderen Einzelstabes verändern. Dies führt dazu, dass sich Hinterschneidungen bilden, die etwa für die Verankerung in der Verfüllmasse von besonderem Vorteil sind. Die Verfüllmasse dringt aufgrund ihrer Plastizität bei der Verarbeitung in diese Hinterschneidungsbereiche ein und kann nach dem Aushärten sich wesentlich besser an der Verankerungsschicht durch die Hinterschnitte der Einzelstäbe festhalten.

Weiterhin ist es in anderer Ausgestaltung denkbar, dass die Armierungsschicht auf der Verankerungsschicht aufgeschweißt oder auch aufgeklebt ist. Hierdurch kann die Armierungsschicht zum einen gut in die Verfüllmasse eingebettet werden, zum anderen hängt sie fest an der Verankerungsschicht, die ebenfalls mit der Verfüllmasse ausgefüllt wird. Damit ergibt sich ein besonders guter Verbund zwischen der Verfüllmasse und der Armierungsschicht bzw. der Verankerungsschicht. Es ist hierbei denkbar, dass die Armierungsschicht als ein gitterartiges Gewebe gebildet ist, vorzugsweise als ein Glasfasergewebe, das zur sicheren Verankerung mit der oberseitig des Entkopplungs- und Heizungssystems einzubringenden Verfüllmasse dient.

Hinsichtlich der Abmessungen der einzelnen Schichten des Entkopplungs- und Heizungssystems ist es denkbar, dass die Dicke der Verankerungsschicht zwischen 2 und 6 Millimetern und damit in einer Ausgestaltung die Gesamtdicke des Entkopplungs- und Heizungssystems im wesentlichen zwischen 2 und 8 Millimetern beträgt. Hierdurch trägt das Entkopplungs- und Heizungssystem nicht wesentlich relativ zu einem vorgegebenen Untergrund auf und kann auch bei räumlichen knappen Einbauverhältnissen unproblematisch eingesetzt werden.

Es ist von wesentlichem Vorteil für die Benutzungseigenschaften des erfindungsgemäßen Entkopplungs- und Heizungssystems, wenn die Verankerungsschicht nach dem Einbringen der Verfüllmasse im wesentlichen vollständig mit der Verfüllmasse ausgefüllt ist und die in die ausgehärtete Verfüllmasse eingebettete Armierungsschicht eine Versteifungs- und Bewehrungsfunktion für die Abtragung von oberhalb eingeleiteter mechanischer Belastungen erfüllt. Damit wird die Lastabtragung über wesentlich größere Schichtdicken als bei bekannten Entkopplungs- und Heizungssystemen möglich, da zusätzlich noch die ganze Schichtdicke der Verankerungsschicht bei mechanischen Belastungen mitträgt und gleichzeitig durch die Armierungsschicht verstärkt ist.

Das erfindungsgemäße Entkopplungs- und Heizungssystem kann mindestens eine weitere Schicht zur Dämmung, insbesondere zur Wärmedämmung und/oder zur Trittschalldämmung aufweisen, die anbringungsseitig z.B. auf der Unterseite eines auf dem Fußboden angeordneten Entkopplungs- und Heizungssystems angeordnet sein kann. Damit lassen sich zusätzliche Eigenschaften des Entkopplungs- und Heizungssystems erreichen, indem die weitere Dämmschicht zusätzliche Dämmarbeiten vor der Verlegung des Entkopplungs- und Heizungssystems überflüssig macht.

Eine besonders bevorzugte Ausführungsform des erfindungsgemäßen Entkopplungs- und Heizungssystems zeigt die Zeichnung.

Es zeigen:
- Figur 1: - einen Schnitt durch ein erfindungsgemäßes Entkopplungs- und Heizungssystem zur Erläuterung des Schichtaufbaus,
- Figur 2: - eine Draufsicht auf ein erfindungsgemäßes Entkopplungs- und Heizungssystem gemäß Figur 1.

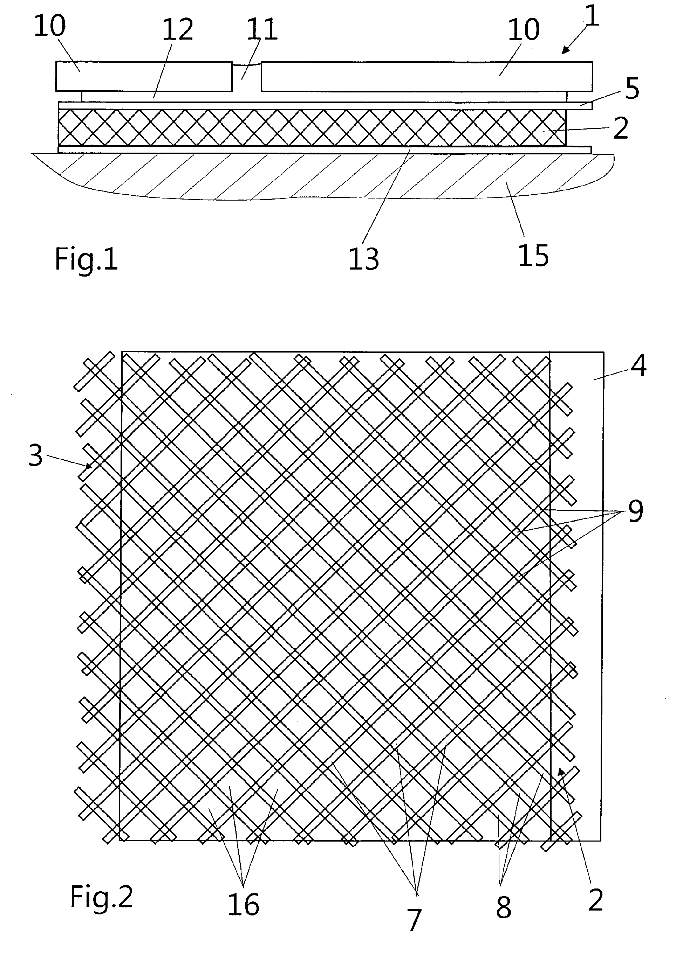

In der Figur 1 ist in einer geschnittenen Seitenansicht der Schichtaufbau eines erfindungsgemäßen kombiniertes Entkopplungs- und Heizungssystems 1 aufgezeigt, wobei in der Figur 2 eine Draufsicht zu erkennen ist. Das Entkopplungs- und Heizungssystems 1 ist in der Figur 1 im Einbauzustand auf einem Untergrund 15, etwa einem Zementestrich oder dergleichen dargestellt, wobei oberhalb des Entkopplungs- und Heizungssystems 1 ein Fliesenbelag aus Fliesen 10 zu erkennen ist, der im Dünnbettverfahren in einem Fliesenmörtel 12 verlegt ist, wobei die Fugen 11 zwischen den einzelnen Fliesen 10 ebenfalls mit einem Fliesenmörtel 12 ausgefüllt sind.

Da erfindungsgemäße Entkopplungs- und Heizungssystems 1 weist unterseitig eine Vliesschicht 13 zur Auflage auf dem Untergrund 15 auf. Oberhalb dieser Vliesschicht 13 ist eine Verankerungsschicht 2 aus einer noch später erläuterten gitterartigen Struktur mit der Vliesschicht 13 verbunden. Die Verbindung kann beispielsweise durch Verkleben oder Verschweißen in grundsätzlich bekannter Weise abhängig von den verwendeten Materialien erfolgen.

Die Verankerungsschicht 2 ebenso wie die mit ihr verbundene und oberhalb angeordnete Armierungsschicht 5 dient zur Verankerung des Entkopplungs- und Heizungssystems 1 an dem Fliesenmörtel 12 und damit der Schicht aus den Fliesen 10. Die Armierungsschicht 5 kann beispielsweise im grundsätzlich bekannter Weise aus einem gitterartig angeordneten Glasfasergewebe bestehen, das entsprechende Öffnungen und freie Bereiche aufweist, damit der Fliesenmörtel 12 möglichst tief in die Verankerungsschicht 2 eintreten kann. Die Verankerungsschicht 2 weist dabei in noch näher beschriebener Weise Aufnahmeräume 16 für den Fliesenmörtel 12 auf und dient damit zur Verbesserung der Verankerung des Fliesenmörtels 12 an dem Entkopplungs- und Heizungssystem 1.

Die Festlegung der Fliesenschicht aus den Fliesen 10 erfolgt hierbei dadurch, dass der Fliesenmörtel 12 vor dem Auflegen der Fliesen 10 oberseitig auf die Armierungsschicht 5 aufgebracht und mit einer Kelle möglichst tief durch die Öffnungen der Armierungsschicht 5 in die Verankerungsschicht 2 hinein gedrückt wird. Der im plastischen Zustand verarbeitete Fliesenmörtel 12 füllt hierbei die Aufnahmeräume 16 in der Verankerungsschicht 2 weitgehend aus und umfließt dabei die in noch näher beschriebener Weise gebildeten Einzelstäbe 7, 8 der Verankerungsschicht 2 nahezu vollständig. Nach dem Aushärten des Fliesenmörtels 12 hat sich ein sehr fester Verband zwischen der Verankerungsschicht 2, der Armierungsschicht 5 und dem Fliesenmörtel 12 gebildet, der zum einen die Fliesen 10 fest an dem Entkopplungs- und Heizungssystem 1 verankert und zum anderen eine stabile, plattenartigen Ausgestaltung der Verankerungsschicht 2 hervorruft. Dadurch ist das Entkopplungs- und Heizungssystem 1 besonders gut belastbar durch oberseitig der Fliesen 10 aufgebrachte mechanische Belastungen.

Die bevorzugt gitterartige Struktur der Verankerungsschicht 2 wird hierbei aus unter einem Winkel zueinander angeordneten Einzelstäben 7, 8 gebildet, die übereinander angeordnet eine zweilagige Schichtanordnung bilden. Die Einzelstäbe 7, 8 weisen jeweils einen etwa rechteckigen Querschnitt auf und sind an den Kreuzungspunkten 9 etwa durch thermische Verfahren miteinander verschweißt. Hierdurch bildet sich auf einfachste Weise eine Übereinanderordnung von etwa parallele Scharen der Einzelstäbe 7, die mit ebenfalls parallelen Scharen der Einzelstäbe 8, die unter einem Winkel zu der Schar der Einzelstäbe 7 liegen, verbunden sind. Zwischen den Einzelstäben 7 bzw. 8 bilden sich die Aufnahmeräume 16 in der Verankerungsschicht 2.

Die gitterartige Struktur aus den Einzelstäben 7, 8 hat weiterhin den Vorteil, dass im Bereich der Kreuzungspunkte 9 beim Verschweißen der Einzelstäbe 7, 8 sich Bereiche an den Einzelstäben 7, 8 bilden, die Hinterschnitte aufweisen und daher zu einer sehr starken Verklammerung des in diese Bereiche eintretenden Fliesenmörtels 12 mit den Einzelstäben 7, 8 nach dem Erhärten führen.

Wenn größere Flächen verarbeitet werden sollen, empfiehlt es sich, sowohl die Armierungsschicht 5 als auch die Verankerungsschicht 2 in Überlappungsbereichen soweit über die Berandung hinüber ragen zu lassen, dass sie mit benachbart anzuordnenden entsprechenden Schichten überlappend etwa verklebt oder sonstwie an diesen befestigt werden können.

Es versteht sich von selbst, dass die in der Figur 2 aufgezeigte Anordnung der Einzelstäbe 7, 8 nur beispielhaft anzusehen ist und sich jegliche Art von geometrischen Mustern aus solchen Einzelstäben 7, 8 bilden lassen, die von Vorteil für die Eigenschaften des hier genannten Entkopplungs- und Heizungssystems 1 ist.

Die Heizungsfunktion des kombinierten Entkopplungs- und Heizungssystems 1 mit der Verankerungsschicht 2 zumindest teilweise aus mechanisch hoch belastbaren Verstärkungsfasern 7, 8 wird nun dadurch erreicht, dass das Material der Verstärkungsfasern 7, 8 selbst elektrisch leitfähig ist oder durch Beschichtungen und/oder Zusätze elektrisch leitfähig geworden ist, wobei die Verstärkungsfasern 7, 8 durch Stromdurchgang erwärmbar sind und die Heizschicht einer elektrisch betreibbaren Flächenheizung bilden. Die Verstärkungsfasern 7, 8 sind hierbei sowohl dazu gedacht, aus der Belastung des z.B. keramischen Belags 10 stammende Kräfte in der Verankerungsschicht 2 aufzunehmen und entkoppelt auf den Untergrund zu übertragen als auch wesentlicher Bestandteil der Heizschicht zu sein, der durch den Stromdurchgang erwärmt wird und diese Wärme an den z.B. keramischen Belag 10 und damit den Raum übertragen kann. Hierbei wird ausgenutzt, dass die zur Verstärkung dienenden Verstärkungsfasern 7, 8 wie in der Figur 2 zu erkennen im wesentlichen die ganze Fläche des Strukturelementes abdecken und damit im wesentlichen gleichmäßig auf dieser Fläche verteilt angeordnet sind. Hierbei kann die Dichte der Anordnung der Verstärkungsfasern 7, 8 sehr unterschiedlich sein, mit relativ großem Abstand wie in der Figur 2 schematisch zu erkennen oder auch mit einem nur sehr geringen seitlichen Abstand zwischen den benachbarten Verstärkungsfasern 7, 8. Dabei können die elektrisch leitfähigen Verstärkungsfasern 7, 8 als Gewebe und/oder als Gelege und/oder als Vlies ausgebildet und schichtartig angeordnet werden. Damit wird die Beheizung dieser Fläche ebenfalls im wesentlichen gleichmäßig erfolgen, ohne dass wie bei anderen Heizungssystemen zusätzlich Heizelemente eingebracht oder mehrere kombinierte Schichten zur Heizung und mechanischen Stabilisierung der Heizschicht eingebracht werden müssen. Zudem kann das Entkopplungs- und Heizungssystem 1 z.B. vom Fliesenleger oder Fußbodenverleger mittels ihm bekannter Techniken wie z.B. dem Verkleben der Verankerungsschicht 2 mit Fliesenklebern 12 oder dgl. verbaut werden Auch werden die unterschiedlichen Ausdehnungen zwischen den als Heizelementen dienenden Verstärkungsfasern 7, 8 und dem restlichen Schichtaufbau und dem z.B. keramischen Belag 10 signifikant dadurch reduziert, dass die die Heizelemente bildenden Verstärkungsfasern 7, 8 mit der Verfüllmasse 12 eine innige Verbindung eingehen und damit sicher an den z.B. keramischen Belag 10 oder auch andere Beläge angebunden werden können.

Als elektrisch leitfähige Verstärkungsfasern 7, 8 können Fasern auf Kohlenstoffbasis, insbesondere Kohlenstofffasern, und/oder Glasfasern und/oder elektrisch leitfähigen Kunststofffasern und/oder metallischen Fasern oder dgl. mechanisch hoch belastbaren faserartigen Materialien dienen. Kohlenstofffasern und metallische Fasern sind selbst elektrisch leitend und können bei entsprechender Dimensionierung, z.B. durch entsprechende Querschnitte oder auch ein Bündeln dünner Einzelfasern zu Strängen (sog. Rovings) entsprechende mechanische Belastungen aufnehmen und übertragen. Elektrisch nicht selbst leitende Verstärkungsfasern 7, 8 wie z.B. Glasfasern oder dgl. können durch Zusätze oder auch Beschichtungen elektrisch leitend gemacht werden, wodurch diese Verstärkungsfasern 7, 8 beim Stromdurchgang dann auch für Heizungszwecke genutzt werden können. Auch ist es denkbar, in die Verankerungsschicht 2 elektrisch leitfähige und nicht elektrisch leitfähige Verstärkungsfasern 7, 8 einzuarbeiten und damit deren Eigenschaften miteinander in der Verankerungsschicht 2 zu kombinieren.

Die elektrisch leitfähigen Verstärkungsfasern 7, 8 sind derart innerhalb der Verankerungsschicht 2 angeordnet, dass sich die Verstärkungsfasern 7, 8 kreuzen und elektrisch kontaktierend z.B. miteinander verpresst sind. Hierdurch wird zwischen den einzelnen Verstärkungsfasern 7, 8 an den Kreuzungs- und Kontaktpunkten 9 mit anderen Verstärkungsfasern 7, 8 jeweils eine Weiterleitung des elektrischen Stroms bewirkt, der dafür sorgt, dass z.B. einzelne mechanisch unterbrochene und dadurch nicht den Strom weiter leitende Verstärkungsfasern 7, 8 überbrückt werden und die Heizleistung der Verankerungsschicht 2 durch derartige Defekte nicht wesentlich beeinträchtigt werden kann.

Im Randbereich des Entkopplungs- und Heizungssystems 1 können weitere z.B. als Bahnen ausgebildete Entkopplungs- und Heizungssysteme 1 einfach dadurch mechanisch und elektrisch kontaktiert werden, dass die Verstärkungsfasern 7, 8 seitlich in einer Randzone 3 überstehen und damit die nächste Bahn des benachbarten Entkopplungs- und Heizungssystems 1 überlappen. Dadurch kann sowohl ein mechanischer als auch ein elektrisch leitender Kontakt zu benachbarten Bahnen des Entkopplungs- und Heizungssystems 1 hergestellt werden.

Zur Zuführung des extern bereitgestellten Stroms kann außenseitig ein Kontaktbereich 4 ausgebildet werden, der z.B. aus einer elektrisch gut leitenden Kupferschicht bestehen kann und auf die die randseitigen Verstärkungsfasern 7, 8 elektrisch kontaktierend aufgebracht sind. An diesen Kontaktbereich 4 kann dann der elektrische Strom über entsprechende nicht dargestellte Kontaktschuhe oder dgl. heran geführt werden.

### Sachnummernliste

- 1: - Entkopplungs- und Heizungssystem
- 2: - Verankerungsschicht
- 3: - Überstand Verankerungsschicht
- 4: - Kontaktbereich
- 5: - Armierungsschicht
- 7: - Einzelstab
- 8: - Einzelstab
- 9: - Kreuzungsbereich
- 10: - Fliese
- 11: - Fuge
- 12: - Fliesenmörtel
- 13: - Vlies
- 15: - Untergrund
- 16: - Aufnahmeräume

## Patentansprüche

1. Kombiniertes Entkopplungs- und Heizungssystem (1), insbesondere für die Verlegung keramischer Beläge (10) im Dünnbettverfahren (12), aufweisend mindestens eine aus einem Strukturelement gebildete Verankerungsschicht (2) für eine im Bereich der Oberseite des Entkopplungs- und Heizungssystems (1) einzubringende, bei der Verarbeitung plastische und danach aushärtende Verfüllmasse (12),
**dadurch gekennzeichnet, dass**
die Verankerungsschicht (2) zumindest teilweise aus mechanisch hoch belastbaren Verstärkungsfasern (7, 8) gebildet ist, deren Material selbst elektrisch leitfähig ist oder die durch Beschichtungen und/oder Zusätze elektrisch leitfähig geworden sind, wobei die Verstärkungsfasern (7, 8) durch Stromdurchgang erwärmbar sind und die Heizschicht einer elektrisch betreibbaren Flächenheizung bilden.

2. Entkopplungs- und Heizungssystem (1) gemäß Anspruch 1, **dadurch gekennzeichnet, dass** die elektrisch leitfähigen Verstärkungsfasern (7, 8) als Gewebe und/oder als Gelege und/oder als Vlies ausgebildet und schichtartig angeordnet sind.

3. Entkopplungs- und Heizungssystem (1) gemäß einem der Ansprüche 1 oder 2, **dadurch gekennzeichnet, dass** die elektrisch leitfähigen Verstärkungsfasern (7, 8) aus Fasern auf Kohlenstoffbasis, insbesondere Kohlenstofffasern, und/oder Glasfasern und/oder elektrisch leitfähigen Kunststofffasern und/oder metallischen Fasern oder dgl. mechanisch hoch belastbaren faserartigen Materialien gebildet sind.

4. Entkopplungs- und Heizungssystem (1) gemäß einem der vorstehenden Ansprüche, **dadurch gekennzeichnet, dass** in die Verankerungsschicht (2) elektrisch leitfähige und nicht elektrisch leitfähige Verstärkungsfasern (7, 8) eingearbeitet sind.

5. Entkopplungs- und Heizungssystem (1) gemäß einem der vorstehenden Ansprüche, **dadurch gekennzeichnet, dass** zumindest die elektrisch leitfähigen Verstärkungsfasern (7, 8) derart innerhalb der Verankerungsschicht (2) angeordnet sind, dass sich zumindest einzelne dieser Verstärkungsfasern (7, 8) kreuzen und elektrisch kontaktierend einander berühren.

6. Entkopplungs- und Heizungssystem (1) gemäß Anspruch 5, **dadurch gekennzeichnet, dass** die Verstärkungsfasern (7, 8) gitterartig in der Verankerungsschicht (2) angeordnet sind und sich vielfach mit anderen, anders in der Verankerungsschicht (2) orientierten Verstärkungsfasern (7, 8) kreuzen.

7. Entkopplungs- und Heizungssystem (1) gemäß einem der vorstehenden Ansprüche, **dadurch gekennzeichnet, dass** zusätzlich zu den Verstärkungsfasern (7, 8) weitere elektrisch leitfähige Elemente in der Verankerungsschicht (2) angeordnet und mit den Verstärkungsfasern (7, 8) elektrisch leitend verbunden sind.

8. Entkopplungs- und Heizungssystem (1) gemäß einem der vorstehenden Ansprüche, **dadurch gekennzeichnet, dass** das Strukturelement mattenartig oder bahnenartig vorgefertigt ist.

9. Entkopplungs- und Heizungssystem (1) gemäß einem der vorstehenden Ansprüche, **dadurch gekennzeichnet, dass** die Verfüllmasse (12) elektrisch isolierend ausgebildet ist.

10. Entkopplungs- und Heizungssystem (1) gemäß einem der vorstehenden Ansprüche, **dadurch gekennzeichnet, dass** im Randbereich der Verankerungsschicht (2) Kontaktierungszonen (3, 4) vorgesehen sind, in denen die Verankerungsschicht (2) mit einer externen Stromversorgung und/oder mit weiteren benachbart anzuordnenden Verankerungsschichten (2) elektrisch verbindbar ist.

11. Entkopplungs- und Heizungssystem (1) gemäß Anspruch 10, **dadurch gekennzeichnet, dass** die Kontaktierungszonen (3) im Randbereich der Verankerungsschicht (2) aus überstehenden Verstärkungsfasern (7, 8) gebildet sind.

12. Entkopplungs- und Heizungssystem (1) gemäß Anspruch 10, **dadurch gekennzeichnet, dass** die Kontaktierungszonen (4) im Randbereich der Verankerungsschicht (2) aus überstehenden elektrisch leitfähigen Schichten besteht, mit denen die Verstärkungsfasern (7, 8) des Strukturelementes elektrisch kontaktierend verbunden sind.

13. Entkopplungs- und Heizungssystem (1) gemäß einem der vorstehenden Ansprüche, **dadurch gekennzeichnet, dass** die Verstärkungsfasern (7, 8) zur Beheizung der Heizschicht mit Niederspannung betreibbar sind.

14. Entkopplungs- und Heizungssystem (1) gemäß einem der vorstehenden Ansprüche, **dadurch gekennzeichnet, dass** oberseitig an der Verankerungsschicht (2) zumindest abschnittsweise fest eine Armierungsschicht (5) angeordnet ist.

15. Entkopplungs- und Heizungssystem (1) gemäß einem der vorstehenden Ansprüche, **dadurch gekennzeichnet, dass** das gitterartige Strukturelement aus stabförmig gitterartig zueinander angeordneten und aneinander an den Kreuzungspunkten (9) des Gitters festgelegten Einzelstäben (7, 8) gebildet ist.

16. Entkopplungs- und Heizungssystem (1) gemäß Anspruch 15, **dadurch gekennzeichnet, dass** die Einzelstäbe (7, 8) des gitterartigen Strukturelementes eine im wesentlichen rechteckige Querschnittsform aufweisen.

17. Entkopplungs- und Heizungssystem (1) gemäß einem der Ansprüche 15 oder 16, **dadurch gekennzeichnet, dass** die sich kreuzenden Einzelstäbe (7, 8) des gitterartigen Strukturelementes so angeordnet sind, dass eine erste Schicht (2) aus jeweils gleich orientierten Einzelstäben (7) unterhalb einer zweiten Schicht (3) aus dazu in einem Winkel angeordneten, jeweils zueinander gleich orientierten Einzelstäben (8) besteht.

18. Entkopplungs- und Heizungssystem (1) gemäß einem der Ansprüche 15 bis 17, **dadurch gekennzeichnet, dass** die gitterartige Struktur aus den Einzelstäben (7, 8) eine Rauten-, Rechteck- oder Quadratform aufweist.

19. Entkopplungs- und Heizungssystem (1) gemäß einem der Ansprüche 15 bis 18, **dadurch gekennzeichnet, dass** die Einzelstäbe (7, 8) der Verankerungsschicht (2) miteinander im Kreuzungsbereich (9) unter mechanischem Druck verschweißt sind.

20. Entkopplungs- und Heizungssystem (1) gemäß einem der Ansprüche 15 bis 19, **dadurch gekennzeichnet, dass** die Einzelstäbe (7, 8) des gitterartigen Strukturelementes zu mindestens an den Kreuzungspunkten (9) zueinander verkippte Kantenbereiche aufweisen, wodurch sich hinterschnittene Abschnitte an den Einzelstäben (7, 8) bilden.

21. Entkopplungs- und Heizungssystem (1) gemäß einem der vorstehenden Ansprüche, **dadurch gekennzeichnet, dass** die Armierungsschicht (5) auf der Verankerungsschicht (2) aufgeklebt oder aufgeschweißt ist.

22. Entkopplungs- und Heizungssystem (1) gemäß einem der vorstehenden Ansprüche, **dadurch gekennzeichnet, dass** die Dicke der Verankerungsschicht (2) zwischen 2 und 6 Millimetern beträgt.

23. Entkopplungs- und Heizungssystem (1) gemäß einem der vorstehenden Ansprüche, **dadurch gekennzeichnet, dass** die Verankerungsschicht (2) nach dem Einbringen der Verfüllmasse (12) im wesentlichen vollständig mit der Verfüllmasse (12) ausgefüllt ist und die in die ausgehärtete Verfüllmasse (12) eingebettete Armierungsschicht (5) eine Versteifungs- und Bewehrungsfunktion für die Abtragung von oberhalb eingeleiteter mechanischer Belastungen erfüllt.

24. Entkopplungs- und Heizungssystem (1) gemäß einem der vorstehenden Ansprüche, **dadurch gekennzeichnet, dass** das Entkopplungs- und Heizungssystem (1) mindestens eine weitere Schicht zur Dämmung, insbesondere zur Wärmedämmung und/oder zur Trittschalldämmung aufweist.
